# EUROPÄISCHE PATENTSCHRIFT

(11) **EP 3 372 915 B1**
(45) Veröffentlichungstag und Bekanntmachung des Hinweises auf die Patenterteilung: **01.01.2020**
(21) Anmeldenummer: 18160547.8
(22) Anmeldetag: 07.03.2018
(51) Int. Cl.: F24F 13/14

(54) **STRÖMUNGSTECHNISCHE INSTALLATION**
FLUIDIC INSTALLATION
INSTALLATION TECHNIQUE FLUIDIQUE

(30) Priorität: 08.03.2017 DE 202017101317 U
(43) Veröffentlichungstag der Anmeldung: 12.09.2018
(73) Patentinhaber: Wildeboer, Werner, 26826 Weener (DE)
(72) Erfinder: Gouterney, Kilian, 26789 Leer (DE); Harms, Thomas, 26605 Aurich (DE)
(74) Vertreter: Ter Meer Steinmeister & Partner

(56) Entgegenhaltungen:
- WO-A1-96/35030
- NL-A- 7 800 763
- US-A- 5 096 156
- US-B1- 8 038 075

## Beschreibung

Die Erfindung betrifft eine strömungstechnische Installation mit einem an einem Strömungskanal zu montierenden Antrieb, der dazu ausgebildet ist, über eine Welle, die in einer Wand des Strömungskanals gelagert ist, ein im Inneren des Strömungskanals angeordnetes Stellorgan anzutreiben, und mit einem Verdrehsicherungselement, das dazu ausgebildet ist, an der Wand des Strömungskanals gehalten zu werden und seinerseits den Antrieb in Position zu halten.

Strömungstechnische Installationen dieser Art sind aus US 8 038 075 B1 und US 5 096 156 A bekannt.

Bei dem Stellorgan kann es sich beispielsweise um eine Klappe eines Volumenstromreglers handeln, mit dem der Volumenstrom in dem Strömungskanal geregelt wird. Um die Klappe zwischen einer geöffneten Stellung und einer stärker geschlossenen Stellung zu verschwenken, wird dann mit Hilfe des Antriebs, der beispielsweise einen Elektromotor aufweist, ein Drehmoment auf die Welle ausgeübt. Durch das Verdrehsicherungselement wird dabei verhindert, dass sich das Gehäuse des Antriebs aufgrund des Reaktionsmoments um die Achse der Welle dreht.

Aufgabe der Erfindung ist es, eine Installation zu schaffen, bei der sich das Verdrehsicherungselement einfach an unterschiedliche Montagesituationen anpassen lässt.

Diese Aufgabe wird erfindungsgemäß dadurch gelöst, dass das Verdrehsicherungselement eine einstückige Platte mit mindestens einer vorgeschwächten Biegelinie aufweist, an der zwei Teile der Platte in ihrer Winkelstellung gegeneinander verstellbar sind.

Dadurch, dass die Platte an der Biegelinie mehr oder weniger stark gebogen wird, lässt sich die Konfiguration der Platte an die unterschiedlichen Montagesituationen anpassen, beispielsweise an unterschiedliche Positionen des Antriebs relativ zu der Wand des Strömungskanals und/oder an Strömungskanäle mit unterschiedlich geformten Wänden.

Vorteilhafte Ausgestaltungen sind in den Unteransprüchen angegeben.

In einer Ausführungsform weist die Platte zwei parallele und vorgeschwächte Biegelinien auf, die die Platte in einen an der Wand des Strömungskanals gehaltenen Abschnitt, einen mit einem Antriebsgehäuse verbundenen Abschnitt und einen dazwischen liegenden Verbindungsabschnitt gliedern. Durch Biegen der Platte an den beiden Biegelinien lässt sich die Steilheit des Verbindungsabschnitts und damit der Abstand zwischen dem Antriebsgehäuse und der Wand des Strömungskanals variieren.

Der Teil der Platte, der an der Wand des Strömungskanals gehalten ist, kann einen Basisteil und mindestens eine Lasche aufweisen, die über eine ebenfalls vorgeschwächte Biegelinie mit dem Basisteil verbunden ist, so dass sich durch Biegen der Platte an dieser Biegelinie das Verdrehsicherungselement an unterschiedliche Querschnittsformen des Strömungskanals anpassen lässt, beispielsweise an kreisförmige Querschnitte mit unterschiedlichen Durchmessern.

Im folgenden wird ein Ausführungsbeispiel anhand der Zeichnung näher erläutert.

Es zeigen:
- Fig. 1: eine perspektivische Ansicht einer lüftungstechnischen Installation gemäß der Erfindung;
- Fig. 2: eine vergrößerte Ansicht eines Verdrehsicherungselements in der Installation nach Fig. 1;
- Fig. 3 und 4: Seitenansichten des Verdrehsicherungselements in unterschiedlichen Montagesituationen, quer zur Achse des Lüftungskanals;
- Fig. 5 und 6: Stirnansichten des Verdrehsicherungselements an rohrförmigen Lüftungskanälen mit unterschiedlichen Durchmessern, in Richtung des Lüftungskanals; und
- Fig. 7: eine Installation gemäß einem anderen Ausführungsbeispiel in der Draufsicht.

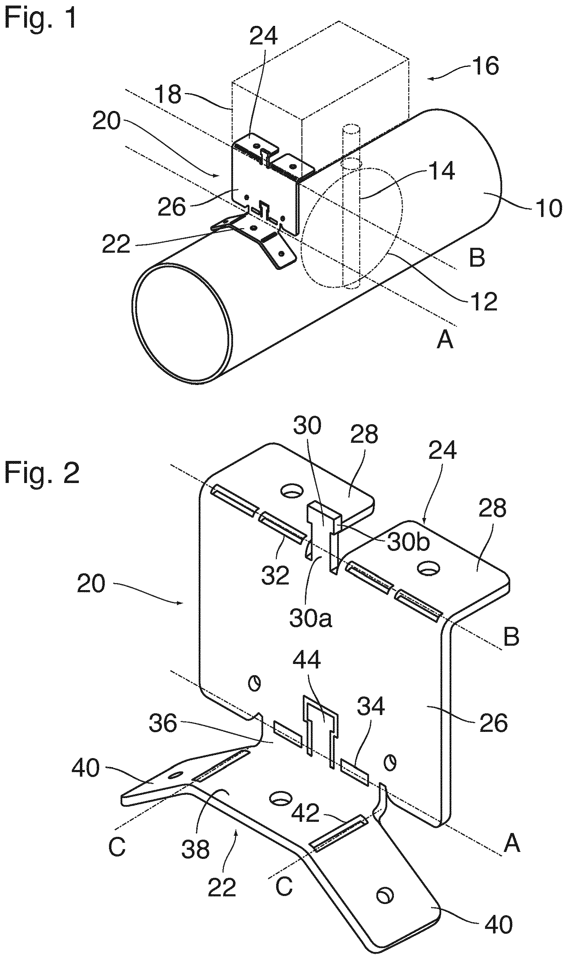

Die in Fig. 1 gezeigte Installation ist an einem Strömungskanal 10 angeordnet, der im gezeigten Beispiel einen kreisförmigen Querschnitt hat, und weist eine Klappe (Stellorgan) 12 auf, die auf einer quer durch das Innere des Strömungskanals verlaufenden Welle 14 gehalten ist und sich mittels eines Antriebs 16 so verschwenken lässt, dass sie den Strömungsquerschnitt in dem Strömungskanal 10 mehr oder weniger verengt.

Von dem Antrieb 16 ist hier nur ein quaderförmiges Antriebsgehäuse 18 gezeigt, das außerhalb des Strömungskanals 10 angeordnet ist. Die Welle durchsetzt eine Öffnung in der Umfangswand des Strömungskanals 10 und verbindet so den Antrieb 16 mit der Klappe 12. Der Antrieb 16 kann beispielsweise einen elektronisch gesteuerten Elektromotor aufweisen, mit dem ein Drehmoment auf die Welle 14 ausgeübt und somit die Klappe 12 verschwenkt wird. Die Klappe 12 und der Antrieb 16 können in diesem Falle zusammen einen elektronischen Volumenstromregler bilden, mit dem der Volumenstrom einer Strömung im Strömungskanal 10 geregelt wird.

Die Welle 14 ist drehbar und axialfest in der Umfangswand des Strömungskanals gelagert und an der Stelle, an der sie diese Umfangswand durchsetzt, abgedichtet. Da die Welle 14 innerhalb des Antriebsgehäuses 18 mit dem hier nicht gezeigten Elektromotor oder einem zugehörigen Getriebe verbunden ist, trägt die Welle 14 zugleich zur mechanischen Befestigung des Antriebs 16 an dem Strömungskanal 10 bei. Wenn jedoch beim Schwenken der Klappe 12 um deren Achse an der Welle 14 ein gewisser Widerstand auftritt, beispielsweise durch Lagerreibung oder eine Dichtung, wenn die Klappe ihre Schließstellung erreicht, so wirkt auf den Antrieb 16 ein Reaktionsmoment, das die Tendenz hat, den gesamten Antrieb relativ zum Strömungskanal 10 um die Achse der Welle 14 zu verdrehen. Aus diesem Grund ist das Antriebsgehäuse 18 zusätzlich an einem Verdrehsicherungselement 20 gehalten, das seinerseits an der Außenwand des Strömungskanals 10 gehalten ist und so das auf das Antriebsgehäuse 18 wirkende Drehmoment in die Wand des Strömungskanals ableitet.

Im gezeigten Beispiel gliedert sich das Verdrehsicherungselement 20 in einen Stützteil 22, der ein Segment des gekrümmten Außenumfangs des Strömungskanals 10 umgreift, einen Konsolenteil 24, an dem das Antriebsgehäuse 18 befestigt ist, und einen Verbindungsteil 26, der den Stützteil 22 mit dem Konsolenteil 24 verbindet. Wahlweise kann der Stützteil 22 mittels Schrauben oder Nieten an der Umfangswand des Strömungskanals 10 fixiert sein. Ebenso kann auch das Antriebsgehäuse 18 mittels Schrauben oder Steckverbindung an dem Konsolenteil 24 befestigt sein.

Bei dem Verdrehsicherungselement 20 handelt es sich um eine einstückige Platte, beispielsweise aus Blech oder thermoplastischem Kunststoff, die mehrere vorgeschwächte Biegelinien aufweist. Zwei dieser Biegelinien sind in Fig. 1 gezeigt und mit A und B bezeichnet. Diese beiden Biegelinien trennen einerseits den Stützteil 22 vom Verbindungsteil 26 und andererseits den Verbindungsteil 26 vom Konsolenteil 24.

In Fig. 2 ist das Verdrehsicherungselement 20 in vergrößertem Maßstab gezeigt. Der Konsolenteil 24 wird durch zwei in einer gemeinsamen Ebene liegende Laschen 28 gebildet, die in der hier gezeigten Konfiguration längs der Biegelinie B um 90° vom Verbindungsteil 26 abgewinkelt sind. Zwischen den beiden Laschen 28 ist eine Zunge 30 gebildet, die in Verlängerung des Verbindungsteils 26 aufragt und eine sichere Positionierung des Antriebs erlaubt. Die Zunge 30 hat eine T-förmige Gestalt mit einem vertikalen Schenkel 30a und einem Querbalken 30b.

Durch längs der Biegelinie B angeordnete Schlitze 32 wird eine Vorschwächung erreicht, so dass sich durch Biegen der Platte an der Biegelinie B die Winkelstellung der Laschen 28 relativ zum Verbindungssteil 26 auf einfache, werkzeuglose und damit sogar manuelle Weise verändern lässt.

Durch weitere Schlitze 34 wird die Platte auch längs der Biegelinie A geschwächt.

In Fig. 2 ist weiterhin zu erkennen, dass sich die Biegelinie A nicht exakt an der Grenze zwischen dem Stützteil 22 und dem Verbindungsteil 26 befindet, sondern am oberen Ende eines Steges 36, der von dem Stützteil 22 um 90° nach oben abgekantet ist. Der Stützteil 22 gliedert sich in einen Basisteil 38, an dem sich auch der Steg 36 befindet, und zwei seitliche Laschen 40, die an weiteren Biegelinien C leicht vom Basisteil 38 abgewinkelt sind, so dass sie den Umfang des Strömungskanals 10 umgreifen und somit eine formschlüssige Verbindung zu dem Strömungskanal herstellen. Auch an den Biegelinien C ist die Platte durch Schlitze 42 geschwächt.

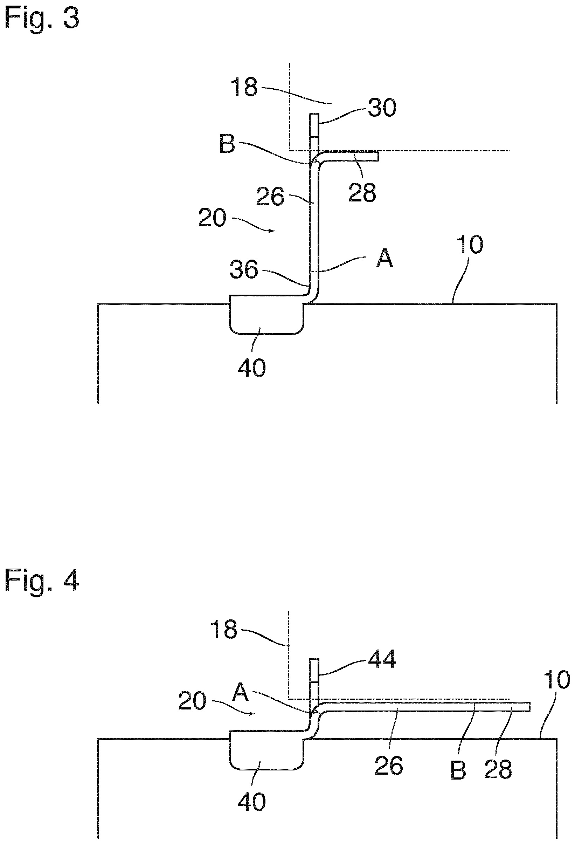

Fig. 3 zeigt das Verdrehsicherungselement 20 in der Konfiguration gemäß Fig. 1 und 2 in einer Seitenansicht, zusammen mit einem Teil des Antriebsgehäuses 18 und einem Teil des Strömungskanals 10. Durch den Verbindungsabschnitt 26 wird in dieser Konfiguration ein relativ großer Abstand zwischen dem Scheitel des Strömungskanals 10 und dem Boden des Antriebsgehäuses 18 hergestellt. Dies ermöglicht es, eine ggf. notwendige Isolierung direkt auf die Oberfläche des Strömungskanals zu bringen; sowohl werkseitig als auch bauseits. Die Zunge 30 durchgreift in diesem Beispiel eine Öffnung im Boden des Antriebsgehäuses 18.

Fig. 4 zeigt das Verdrehsicherungselement 20 in einer anderen Konfiguration, in der der Abstand zwischen dem Strömungskanal 10 und dem Antriebsgehäuse 18 deutlich verringert ist. Das wird dadurch erreicht, dass der Verbindungsteil 26 an der Biegelinie A um 90° gegenüber dem Steg 36 umgebogen wird, während andererseits die Laschen 28 an der Biegelinie B in die Ebene des Verbindungsteils 26 zurückgebogen werden. Diese Ausführung wird insbesondere dann gewählt, wenn keine Isolierung des Strömungskanals notwendig ist oder wenn beengte Platzverhältnisse eine kompakte Anordnung von Antrieb und Strömungskanal verlangen.

Beim Umbiegen der Platte an der Biegelinie A bleibt eine aus dem Verbindungsteil 26 ausgesparte Zunge 44 stehen, die nun anstelle der in Fig. 2 gezeigten Zunge 30 zur Positionierung und Fixierung des Antriebsgehäuses 18 dient.

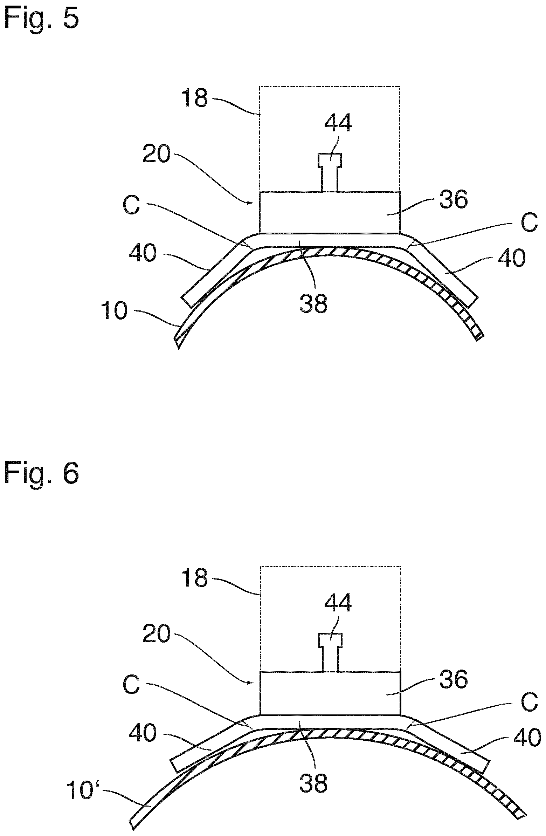

Fig. 5 zeigt das Verdrehsicherungselement 20 in der Konfiguration gemäß Fig. 4 in einer Stirnansicht, zusammen mit einem Teil des Querschnittes des Strömungskanals 10.

Fig. 6 zeigt eine Stirnansicht des Verdrehsicherungselements 20 in einer Konfiguration, in der die Laschen 40 an den Biegelinien C weiter aufgebogen sind, so dass der Basisteil an einen Strömungskanal 10' mit größerem Durchmesser angepasst ist.

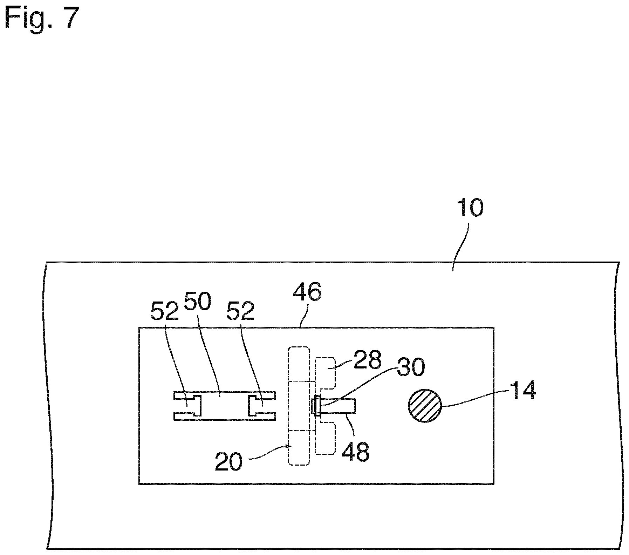

Fig. 7 zeigt eine Installation gemäß einem anderen Ausführungsbeispiel in der Draufsicht. Für die Befestigung des Antriebsgehäuses ist hier auf den Laschen 28 des Verdrehsicherungselements 20 eine zusätzliche Konsolenplatte 46 befestigt, in der die Welle 14 drehbar gelagert ist und auf der das hier nicht gezeigte Antriebsgehäuse montiert werden kann. Die Konsolenplatte 46 weist ein Langloch 48 auf, das von der Zunge 30 (oder wahlweise 44) so durchgriffen wird, dass der vertikale Schenkel 30a passend in das Langloch eingreift und so die Konsolenplatte 46 gegen Verdrehung um die Welle 14 sichert, während der Querbalken 30b den Rand des Langloches übergreift und die Konsolenplatte gegen ein Abheben nach oben sichert. Auch in diesem Ausführungsbeispiel kann die Zunge 30 (oder wahlweise 44) noch dazu verwendet werden, einen Antrieb zu positionieren und zu fixieren. Bei der Montage kann das Verdrehsicherungselement in einer leichten Drehbewegung so eingesetzt werden, dass der Querbalken 30b durch das Langloch 48 hindurchtritt. Alternativ ist das Langloch 48 breiter als der Querbalken 30b und das Verdrehsicherungselement 20 und die Konsolenplatte 46 werden beispielsweise mittels Nieten verbunden.

Im gezeigten Beispiel weist die Konsolenplatte 46 einen rechteckigen Durchbruch 50 auf, an dessen Enden zwei weitere T-förmige Zungen 52 gebildet sind, die sich aus der Ebene der Konsolenplatte heraus biegen lassen und beispielsweise dazu dienen können, Antriebe anderer Bauart, insbesondere solche mit einem größeren Gehäuse, sicher auf der Konsolenplatte zu befestigen. Auf diese Weise wird eine einfache Adaptierung an unterschiedlich gestaltete Antriebssysteme ermöglicht.

In einer modifizierten Ausführungsform können die Zungen 30 und/oder 44 anders konfiguriert oder angeordnet sein, um eine Anpassung an unterschiedlich gestaltete Antriebsgehäuse zu ermöglichen. Beispielsweise können die Zungen auch Rastnasen für eine Rastbefestigung des Antriebsgehäuses oder anderer Komponenten aufweisen.

## Patentansprüche

1. Strömungstechnische Installation mit einem an einem Strömungskanal (10) zu montierenden Antrieb (16), der dazu ausgebildet ist, über eine Welle (14), die in einer Wand des Strömungskanals (10) gelagert ist, ein im Inneren des Strömungskanals (10) angeordnetes Stellorgan (12) anzutreiben, und mit einem Verdrehsicherungselement (20), das dazu ausgebildet ist, an der Wand des Strömungskanals (10) gehalten zu werden und seinerseits den Antrieb (16) in Position zu halten, wobei das Verdrehsicherungselement (20) eine einstückige Platte aufweist, **dadurch gekennzeichnet, dass** die einstückige Platte mindestens eine vorgeschwächte Biegelinie (A, B, C) aufweist, an der zwei Teile der Platte in ihrer Winkelstellung gegeneinander verstellbar sind.

2. Installation nach Anspruch 1, bei der die Platte des Verdrehsicherungselements (20) durch zwei parallel zueinander verlaufende vorgeschwächte Biegelinien (A, B) in einen Stützteil (22), der dazu ausgebildet ist, an dem Strömungskanal (10) gehalten zu werden, einen Konsolenteil (24), der ein Antriebsgehäuse (18) hält, und einen den Stützteil (22) und den Konsolenteil (24) verbindenden Verbindungsteil (26) gegliedert ist.

3. Installation nach Anspruch 2, bei der der Verbindungsteil (26) an mindestens einer Stelle der Biegelinie (B), die den Verbindungsteil (26) mit dem Konsolenteil (24) verbindet, durch eine in der Ebene des Verbindungsteils (26) liegende, über die Biegelinie (B) hinaus ragende Zunge (30) verlängert ist.

4. Installation nach Anspruch 2 oder 3, bei der der Stützteil (22) starr mit einem rechtwinklig gegenüber dem Stützteil abgewinkelten Steg (36) verbunden ist und der Steg (36) über eine (A) der Biegelinien mit dem Verbindungsteil (26) verbunden ist.

5. Installation nach Anspruch 4, bei der der Steg (36) an mindestens einer Stelle der Biegelinie (A) durch eine in der Ebene des Steges (36) liegende, über die Biegelinie (A) hinaus ragende Zunge (44) verlängert ist.

6. Installation nach einem der Ansprüche 2 bis 5, bei der die Zunge (30; 44) ein Langloch (48) durchgreift, das in einer Konsolenplatte (46) für den Antrieb (16) oder im Boden des Antriebsgehäuses (18) gebildet ist.

7. Installation nach einem der vorstehenden Ansprüche, bei der die Platte des Verdrehsicherungselements (20) einen Stützteil (22) aufweist, der an dem Strömungskanal (10) gehalten ist und der eine Basis (38) sowie mindestens eine Lasche (40) aufweist, die über eine vorgeschwächte Biegelinie (C) mit der Basis (38) verbunden ist.

## Claims

1. A fluidic installation comprising a drive mechanism (16) that is mounted on a flow channel (10) and configured to drive, via a shaft (14), an adjusting element (12) that is arranged in the interior of the flow channel (10), the installation further comprising an anti-rotation lock (20) configured to be held on the wall of the flow channel (10) and to hold the drive mechanism (16) in position, wherein the anti-rotation lock (20) as a one-piece plate,
**characterized in that** the one-piece plate has at least one pre-weakened bending line (A, B, C) along which two parts of the plate are adjustable in their relative angular position.

2. The installation according to claim 1, wherein the plate of the anti-rotation lock (20) is divided, by two pre-weakened bending lines (A, B) that extend in parallel to one another, into a support part (22) configured to be held on the flow channel (10), a bracket part (24) holding a drive casing (18), and a connecting part (26) connecting the support part (22) to the bracket part (24).

3. The installation according to claim 2, wherein the connecting part (26) is extended in at least one position on the bending line (B) that joins the connecting part (26) to the bracket part (24) by a lug (30) that is arranged in the plane of the connecting part (26) and projects beyond the bending line (B).

4. The installation according to claim 2 or 3, wherein the support part (20) is rigidly connected to a web (36) that is bent to be orthogonal to the support part, and the web (36) is joined to the connecting part (26) via a bending line (A).

5. The installation according to claim 4, wherein the web (36) is extended in at least one position of the bending line (A) by a lug (44) that is arranged in the plane of the web (36) and projects beyond the bending line (A).

6. The installation according to any of the claim 2 to 5, wherein the lug (30, 44) passes through an elongated hole (48) that is formed in a bracket plate (46) for the drive mechanism (16) or in the bottom wall of the drive housing (18).

7. The installation according to any of the preceding claims, wherein the plate of the anti-rotation lock (20) has a support part (22) that is held on the flow channel (10) and has a base as well as at least one flap (40) that is connected to the base (38) via a pre-weakened bending line (C).

## Revendications

1. Installation de technique fluidique comportant un entraînement (16) à monter sur un conduit d'écoulement (10),dans lequel l'entraînement est conçu pour entraîner un organe de réglage (12) agencé à l'intérieur du conduit d'écoulement (10) par l'intermédiaire d'un arbre (14) monté dans une paroi du conduit d'écoulement (10), et comportant un élément anti-rotation (20) qui est conçu pour être maintenu sur la paroi du conduit d'écoulement (10) et qui doit quant à lui maintenir l'entraînement (16) en position, l'élément anti-rotation (20) comportant une plaque d'un seul tenant,
**caractérisée en ce que** la plaque d'un seul tenant comporte au moins une ligne de pliage pré-affaiblie (A, B, C) sur laquelle deux parties de la plaque peuvent être réglées dans leur position angulaire l'une par rapport à l'autre.

2. Installation selon la revendication 1, dans laquelle la plaque de l'élément anti-rotation (20) est divisée par deux lignes de pliage pré-affaiblies (A, B) s'étendant parallèlement l'une à l'autre, en une partie de support (22) conçue pour être maintenue sur le conduit d'écoulement (10), une partie de console (24) qui maintient un boîtier d'entraînement (18), et une partie de liaison (26) reliant la partie de support (22) et la partie de console (24).

3. Installation selon la revendication 2, dans laquelle la partie de liaison (26) est prolongée à au moins un endroit de la ligne de pliage (B) qui relie la partie de liaison (26) à la partie de console (24), par une languette (30) faisant saillie au-delà de la ligne de pliage (B) et située dans le plan de la partie de liaison (26) .

4. Installation selon la revendication 2 ou 3, dans laquelle la partie de support (22) est reliée de manière rigide à une entretoise (36) coudée orthogonalement par rapport à la partie de support, et l'entretoise (36) est reliée à la partie de liaison (26) par l'intermédiaire d'une ligne de pliage (A).

5. Installation selon la revendication 4, dans laquelle l'entretoise (36) est prolongée à au moins un endroit de la ligne de pliage (A) par une languette (44) faisant saillie au-delà de la ligne de pliage (A) et située dans le plan de l'entretoise (36).

6. Installation selon l'une des revendications 2 à 5, dans laquelle la languette (30 ; 44) passe à travers un trou oblong (48) formé dans une plaque de console (46) pour l'entraînement (16) ou dans le fond du boîtier d'entraînement (18).

7. Installation selon l'une des revendications précédentes, dans laquelle la plaque de l'élément anti-rotation (20) comporte une partie de support (22) maintenue sur le conduit d'écoulement (10) et comportant une base (38) ainsi qu'au moins une patte (40) reliée à la base (38) par l'intermédiaire d'une ligne de pliage pré-affaiblie (C) .
